# EUROPEAN PATENT APPLICATION

(11) **EP 4 339 174 A1**
(43) Date of publication of application: **20.03.2024**
(21) Application number: 23196635.9
(22) Date of filing: 11.09.2023
(51) Int. Cl.: C04B 28/02, C04B 28/04

(54) **FIBER CEMENT PRODUCT AND PROCESS FOR ITS PRODUCTION**

(30) Priority: 14.09.2022 IT 202200018762
(71) Applicant: Societa'Italiana Lastre S.p.A., 25028 Verolanuova (Brescia) (IT)
(72) Inventor: TEPPA, Franco, 25028 Verolanuova (BS) (IT); BERTELLI, Giovanni, 25028 Verolanuova (BS) (IT); FRANCESCHETTI, Roberto, 25028 Verolanuova (BS) (IT)
(74) Representative: Botti & Ferrari S.p.A.

(57) **Abstract**

A process for producing a fibrocement product is described, which comprises the steps of:
- providing a green fibrocement product;
- curing said green fibrocement product, thereby obtaining said fibrocement product,
the process being characterized in that said green fibrocement product comprises cement, organic fibers and glass powder. The invention also relates to a fibrocement product such as a slab or a panel obtained through a process as above.

## Description

### Field of application

In its more general aspect, the present invention relates to the field of production of fibrocement products.

In particular, the present invention relates to a process for the production of a fibrocement product from a slurry comprising cement, organic fibers and glass powder, the glass powder preferably, but not exclusively, consisting of volatile residues (the so-called glass fumes) coming from post-consumer glass recycling treatments.

The present invention also relates to a fibrocement product obtained by a process as above.

### Prior art

As it is known, fibrocement products are widely used as building materials, in particular for the coating of inner and outer faces of buildings. In particular, said fibrocement products are well known as temporary or permanent building materials, for example to cover or to provide walls or roofs, such as tiles or facade slabs and the like.

It is also known that fibrocement products are obtained from a slurry comprising the components cement, fillers, fibers and additives, said slurry is compressed to form a fibrocement product in the desired form, for example in the form of a slab, and then cured (or in other words matured) in air or autoclave.

The fibers may be reinforcement fibers or process fibers, that may be both natural organic fibers, typically cellulose fibers, and synthetic organic fibers such as, for example, polyvinyl alcohol fibers (PVA), polypropylene fibers (PP), etc.

Among the additives used in the above-mentioned mixture comprising cement and organic fibers, a silicate source is known to be used, in particular crystalline silica deriving, for example, from sand or quartz.

In fact, during curing of the fibrocement product, silica reacts with the lime of the cement component, thereby forming stable silicates that improve the characteristics of stability and mechanical strength of the fibrocement product. This effect is particularly remarkable when the fibrocement product is cured in an autoclave.

However, crystalline silica deriving, for example, from sand or quartz and used as a silicate source in the production of fibrocement products has the drawback of having a relatively high cost.

Moreover, in the productive process of the fibrocement products, crystalline silica is used in the form of powders having a very small particle size. However, it is known that crystalline silica is harmful to health and a possible exposure to silica powders, for example at the workplace, may increase the risk to contract pathologies related thereto, such as silicosis, resulting in a risk for the involved workers.

Moreover, in recent years, the demand to use recycled and environmentally friendly products in production systems is increasingly growing, thereby reducing as much as possible the use of natural raw materials, so as to make said productive systems more environmentally compatible according to a circular economy model and to reduce production costs.

The main purpose of the present invention is thus to provide a process for the production of a fibrocement product that allows to reduce as much as possible the use of crystalline silica as an additive and, at the same time, to obtain a fibrocement product with characteristics that are suitable for the uses to which it is intended, in particular a fibrocement product with suitable characteristics of mechanical strength.

Another purpose of the present invention is to provide a process as above that is more environmentally compatible and that can be carried out on an industrial scale with relatively low costs.

A further purpose of the present invention is to provide a fibrocement product having characteristics that are suitable for the uses to which it is intended, in particular a fibrocement product having suitable characteristics of mechanical strength, obtainable by a process of the above-mentioned type.

### Summary of the invention

The Applicant surprisingly found that, by at least partially replacing the crystalline silica used as a silicate source additive in the process of production of fibrocement products with a glass powder of a very small particle size, in particular a glass powder consisting of volatile residues (glass fumes) of post-consumer glass recycling treatments, it is possible to obtain a fibrocement product having characteristics that are comparable to those of an analogous conventional fibrocement product obtained using crystalline silica and not glass powder as a silicate source additive, in particular as regards the characteristics of mechanical strength.

Based on this discovery, the above-mentioned purposes are primarily achieved by a process for producing a fibrocement product comprising the steps of:
- providing a green (i.e. not cured) fibrocement product;
- curing said green fibrocement product, thereby obtaining said fibrocement product,
the process being characterized in that said green fibrocement product comprises water, cement, organic fibers and glass powder.

In an embodiment, the glass powder has a content of amorphous silica of at least 60%, preferably between 70% and 90%, wherein the percentages are by weight on the overall weight of the glass powder.

In an embodiment, at least 90% of the glass powder particles has an average size (particle size) lower or equal to 200 microns. Preferably, at least 50% of the particles of the glass powder, preferably between 70% and 90%, has a size of the particles lower or equal to 100 microns, in particular lower or equal to 90 microns.

In an embodiment, the glass powder comes at least partially from a glass recycling treatment, for example from post-consumer glass packaging. In particular, the glass powder may preferably constitute a volatile residue, also called "glass fume", produced during crushing or grinding of a glass material in a process of glass recycling treatment. Said volatile residue is a processing waste that is normally sucked to separate it from the material made of ground/crushed glass and captured in designated filters.

In an embodiment, the green fibrocement product contains glass powder in a total amount which is not higher than 40% by weight, preferably in an amount which is not higher than 20%, more preferably in an amount between 2% and 10% by weight on the total weight of the green fibrocement product.

In an embodiment, the green fibrocement product further contains crystalline silica or a crystalline silica source, such as, for example, sand or quartz, in an amount between 50% and 90%, in particular between 70% and 90% by weight on the overall weight of the crystalline silica or the crystalline silica source and the glass powder.

In an embodiment, the total amount of glass powder and crystalline silica or a crystalline silica source in the green fibrocement product is up 50% by weight, preferably up to 40% by weight, on the total weight of the green fibrocement product.

In an embodiment, the organic fibers are present in the green fibrocement product in an amount up to 15%, preferably between 5% and 10% by weight on the weight of the green fibrocement product.

Preferably, the organic fibers are natural organic fibers such as, in particular, cellulose fibers, and/or synthetic fibers, such as, in particular, polyvinyl alcohol fibers (PVA).

In an embodiment, the green fibrocement product comprises 40% to 60% of cement, up to 40% of silica or a source thereof of which 70-90% consists of crystalline silica or a source thereof and the remaining 10-30% consists of glass powder, and up to 15% of fibers.

In an embodiment, the green fibrocement product is obtained by a process comprising the steps of:
- forming a slurry comprising water, cement, organic fibers, glass powder as defined above and optionally crystalline silica or a source thereof,
- subjecting said slurry to at least one compression step, thereby obtaining said green fibrocement product.

In an embodiment, the curing (or "maturation") of the green fibrocement product is made in air or autoclave, preferably in an autoclave.

The above-mentioned purposes are also achieved by a fibrocement product obtained by a process as described above.

In an embodiment, the fibrocement product has the form of a slab or panel.

In an embodiment, the fibrocement product has a moisture which is not lower than 8%, preferably between 9% and 15%.

In an embodiment, the fibrocement product is an element of a temporary or permanent building construction.

The above-mentioned purposes are also achieved by the use of glass powder, in particular glass powder coming from a post-consumer glass recycling treatment, for the production of a fibrocement product.

### Detailed description

In the present description, the indication of numerical ranges includes all the values and fractions included in the respective ranges as well as the end values.

In the context of the present invention, "fibrocement product" means a flat, usually rectangular, cement element in the form of a product, panel or slab made of a material comprising (synthetic or natural) organic fibers and cement.

As it is known in the art, the fibrocement product is obtained from a aqueous fibrocement slurry that is formed into a so-called green (i.e. not cured) fibrocement product, which is then cured in a conventional way, for example in air or in an autoclave.

According to the present invention, the fibrocement slurry comprises water, cement, organic fibers and glass powder.

The organic fibers may be natural and/or synthetic.

Preferably, the natural organic fibers are typically cellulose fibers.

Preferably, the synthetic organic fibers are selected from the group comprising polyvinyl alcohol, polyacrylonitrile, polypropylene, polyamide, polyester, polycarbonate, polyethylene and combinations thereof.

The organic fibers may be present in the green fibrocement slurry in an amount up to 15%, preferably between 5% and 10% by weight on the weight of the green fibrocement product.

The cement may be of any type suitable for obtaining a fibrocement product, as it is known in the art. For example, the cement or the cement material may be selected from one or more of the following: any type of Portland cement, in particular Portland-pozzolana cement, calcareous material, plaster, quicklime, slaked or hydrated lime, high-alumina cement, iron Portland cement, trass cement, slag cement, plaster, calcium silicates, etc.

The glass powder may derive from any type of glass that has preferably a content of amorphous silica of at least 60%, preferably between 70% and 90%, wherein the percentages are by weight on the overall weight of the glass powder.

Moreover, preferably, at least 90% of the glass powder has an average particle size (particle size) lower or equal to 200 microns. Preferably, at least 50% of the particles of the glass powder, preferably between 70% and 90%, have a size of the particles lower or equal to 100 microns, in particular lower or equal to 90 microns, where the particle size is measured through analysis by sieving.

In a preferred embodiment, the glass powder comes from a glass recycling treatment, for example from post-consumer glass packaging (e.g. bottles). In particular, the glass powder consists preferably of a volatile residue, also called "glass fume", produced as a processing waste of a treatment of grinding/crushing a glass material in a glass recycling process.

The fibrocement slurry may contain glass powder in an amount which is not higher than 40% by weight, preferably in an amount which is not higher than 20%, more preferably in an amount between 2% and 10% by weight on the total weight of the green fibrocement product.

The fibrocement slurry may further comprise crystalline silica or a crystalline silica source, such as, for example, sand or quartz, in an amount between 50% and 90%, in particular between 70% and 90% by weight on the overall weight of the crystalline silica or the crystalline silica source and the glass powder. The addition of silica into the fibrocement slurry is particularly useful when the fibrocement slurry is cured through a process in an autoclave.

In any case, according to the present invention, the total amount of silica in the fibrocement slurry consists at least partially of amorphous silica deriving from the glass powder, so as to at least partially replace the content of crystalline silica that would be required to obtain the fibrocement product, the characteristics, in particular the mechanical characteristics, of said fibrocement product being the same.

As a matter of fact, as it is evident from the experimental section (examples) provided below, it was surprisingly found that the addition of glass powder as a partial or total replacement of the crystalline silica source used as silicate source additive in the process for producing a fibrocement product gives, at the end of the process, a fibrocement product having characteristics, in particular of mechanical strength, that are comparable to those of a fibrocement product produced in the same way using crystalline silica and not glass powder as the silicate source additive providing silica.

At the same time, using glass powder in the fibrocement slurry as the material providing silica allows to significantly reduce the production costs of the fibrocement product, since it can advantageously be waste material coming from post-consumer treatments of recycling manufactured articles made of glass. It is indeed worth noting that, in the ordinary glass recycling treatments, the material made of glass to be recycled (coming, for example, from post-consumer glass packaging, such as bottles), after some preliminary operations directed to separate glass from other components that are in the material to be recycled, may be subjected to grinding or crushing, thereby obtaining a ground glassy material that can be reused for the production of new manufactured articles made of glass, and thereby also obtaining glass powder having a very small particle size also called "glass fume", that constitutes waste material and, as such, has insignificant economic value. In accordance with present invention, said glass powder, instead of being disposed of according to the regulations in force, is reused in the production of fibrocement products according to the process described above, thereby also making said process more environmentally friendly.

Due to the at least partial replacement of crystalline silica with silica powder, according to the process of the invention, the safety of workers at the workplace designated for the production of fibrocement products is also improved.

Therefore, the process according to the present invention provides a considerable advantage from the standpoint of its sustainability in both economic and environmental terms, but also in terms of salubrity and safety at the workplace for the involved operators.

The fibrocement slurry may comprise further components such as pigments, antifoaming agents, flocculating agents, and/or other additives. The addition of a coloring additive (for example pigments) may be carried out to obtain a fibrocement product that is so-called mass-colored.

In the process according to the invention, the fibrocement slurry is formed into a so-called green (i.e. not cured) fibrocement product in the desired form, such as a slab or a panel, through per se conventional procedures, such as for example through Hatschek process, low-on process, Magnani process or combinations thereof.

In a preferred embodiment, the green fibrocement product is obtained using a Hatschek process.

The green fibrocement product may be advantageously subjected to compression, preferably to double compression, before curing. For example, the fibrocement product may be subjected to a first compression by letting it pass through suitable rollers, and, preferably, to a second compression in a press, for example at a pressure of 200-250 Kg/m², according to ways that are per se conventional and known to the person skilled in the art.

Curing of the green fibrocement product may be made in a per se conventional way, in particular by curing in air or autoclave.

Preferably, curing of the "green" fibrocement product is made in autoclave. Said curing in autoclave is made at a higher pressure than the atmospheric pressure, for example at a pressure of 9-12 atmospheres, in the presence of vapor and at a controlled temperature of about 180°C or higher.

At the end of curing, a fibrocement product is obtained that has still a significant amount of residual water (moisture) equal to at least 8%, in particular between 9% and 15%, wherein the percentages are calculated as the percentage ratio between the weight difference between the weight of the moist fibrocement product and the fibrocement product dried at 105°C in a convection furnace until a constant weight is obtained, and the weight of the moist fibrocement product.

The fibrocement product thereby obtained may be possibly cut at a predetermined length to form fibrocement slabs or panels of predetermined sizes.

The fibrocement product obtained according to the process of the invention described above is preferably a fibrocement panel or slab that may be subjected, if necessary, to subsequent finishing treatments known in the art.

Said subsequent treatments may comprise for example sandblasting on one or both the opposite surfaces to give the slab or the panel a rough surface appearance and/or a waterproofing treatment on at least one of its surfaces (after sandblasting, if provided) with a hydrophobic material, usually consisting of silanes and/or siloxanes, in order to give the slab or the panel a suitable protection against external atmospheric agents, in particular a protection against the penetration of water into the slab or panel.

The fibrocement slab or panel according to the invention may have a density between about 0.5 kg/dm³ and about 2.2 kg/dm³, in particular between 1.0 kg/dm³ and 2.0 kg/dm³.

The fibrocement slab or panel may have a thickness preferably up to 45 mm, typically a thickness between 4 mm and 20 mm, in particular between 4 mm and 12 mm. Moreover, the fibrocement slab or panel may have a height typically up to 4m, preferably between 2 m and 4m, for example a height between 2.5 m and 3.5 m. The width of the fibrocement slab or panel may be preferably between 0.6 m and 1.75m, in particular between 0.75 m and 1.5 m.

The fibrocement product according to the invention may be used, in particular, as an element of a temporary or permanent building construction, for example to provide and/or coat walls, typically outside walls and roofs, for example as tiles or slate.

The present invention may thus certainly provide a considerable advantage from the standpoint of its sustainability in both economic and environmental terms, but also in terms of healthiness and safety at the workplace for the involved operators.

Further characteristics and advantages of the present invention will appear more clearly from the exemplifying embodiments described below which are provided by way of non-limiting illustration.

### Example 1 (comparative)

Conventional fibrocement slabs were produced from a fibrocement slurry comprising, in addition to water, the following components:
- Cement (Portland-pozzolana cement) in an amount between 50%-60%;
- Organic fibers (cellulose fibers) in an amount between 5%-10%;
- crystalline silica (the product Silverbond (Sibelco) having a silica content of at least 95%) in an amount between 30%-40%;
- further additives such as antifoaming agents, flocculating agents, pigments, and other additives.

The % by weight are expressed as the percentage of the component on the dry weight of the slurry, i.e. the weight of all the components without water.

The fibrocement slurry was transformed into a green fibrocement slab through Hatschek process.

The green fibrocement slab was then subjected to a first pressing between rollers and to a second pressing in a press (double compression) so as to reduce the thickness to about 8 mm and to obtain a density of about 1.6 kg/dm³. The dimensions of the slab were about 3.10 m x 1.28 m.

The green fibrocement slab was then cured in an autoclave at a pressure of 10 Atm, in the presence of water vapor, and at a temperature of 180°C for a time period of 24 hours.

The fibrocement slab thereby obtained had a moisture content of about 9% by weight.

### Example 2 (according to the invention)

Fibrocement slabs according to the invention were produced following the same procedure as in Example 1 with the difference that, in the initial slurry, about 10% of the crystalline silica was replaced with glass powder (the product Glass Powder 100 Ultrafine of Sibelco). The fibrocement slurry comprised thus about 90% of crystalline silica and about 10% of glass powder, wherein the percentages are by weight on the overall weight of the crystalline silica and the glass powder added to the slurry.

The glass powder used in the slurry had a content of amorphous silica of about 71% and an average particle size lower than 200 microns with about 85% of the glass powder particles having a size lower than 90 microns.

The fibrocement slabs thereby obtained had a moisture content of about 9.3-9.5% by weight, a density of about 1.6 kg/dm³. The dimensions of each slab were about 3.1 m x 1.28 m and the thickness was 8 mm.

### Example 3 - Properties of the fibrocement slabs

The comparative fibrocement slabs obtained according to Example 1 and the fibrocement slabs according to the invention obtained according to Example 2 were tested for their mechanical properties (bending breaking load), dilatation and water absorption.

The bending breaking load of the slabs and the dilatation were determined according to the standard method EN12467:2018, whereas the absorption was determined as the percentage ratio between the difference between the weight of the slab previously dried in oven at 105°C until a constant weight was reached and the weight of the slab after immersion in water for 24 hours at ambient temperature, and the weight on the dried slab.

The results of the mechanical tests on the comparative slabs obtained according to Example 1 are shown in Table 1 below.

**Table 1**

| | Breaking load | | Bending moment | | Sigma N/mm2 | | S1/S2 | S1+S2/2 |
|---|---|---|---|---|---|---|---|---|
| Slab | P1N | P2N | M1N | M2N | S1 | S2 | N/mm1 | N/mm2 |
| 1 | 1624 | 930 | 87290 | 49988 | 31.2 | 17.8 | 73% | 24.50 |
| 2 | 1652 | 908 | 88795 | 48805 | 31.7 | 17.4 | 71% | 24.56 |
| 3 | 1642 | 956 | 88258 | 51385 | 30.7 | 17.9 | 74% | 24.32 |
| 4 | 1661 | 981 | 89279 | 52729 | 31.9 | 18.8 | 74% | 25.34 |
| 5 | 1592 | 944 | 85570 | 50740 | 30.5 | 18.1 | 74% | 24.33 |
| 6 | 1610 | 953 | 86538 | 51224 | 30.9 | 18.3 | 74% | 24.59 |
| **Averages** | | | | | **31.2** | **18.1** | **73%** | **24.61** |

Moreover, the comparative slabs have an average percentage absorption value of about 20.8% and a dilatation from 0.40 to 0.80 mm/m.

The results of the mechanical tests on the slabs of the invention obtained according to Example 2 are shown in Table 2 below.

**Table 2**

| | Breaking load | | Bending moment | | Sigma N/mm2 | | S1/S2 | S1+S2/2 |
|---|---|---|---|---|---|---|---|---|
| Slab | P1N | P2N | M1N | M2N | S1 | S2 | N/mm1 | N/mm2 |
| 1 | 1648 | 1019 | 88580 | 54771 | 31.6 | 19.5 | 76% | 24.58 |
| 2 | 1652 | 982 | 88795 | 52782 | 31.7 | 18.8 | 75% | 24.27 |
| 3 | 1697 | 1012 | 91214 | 54395 | 31.8 | 19.0 | 75% | 24.36 |
| 4 | 1691 | 1005 | 90891 | 54019 | 31.7 | 18.8 | 75% | 25.24 |
| 5 | 1589 | 968 | 85409 | 52020 | 29.8 | 18.1 | 76% | 23.94 |
| 6 | 1554 | 878 | 83527 | 47192 | 29.1 | 16.4 | 72% | 22.77 |
| **Averages** | | | | | **30.9** | **18.5** | **75%** | **24.69** |

Moreover, the slabs of the invention have an average percentage absorption value of about 21% and a dilatation of about 0.40-0.80 mm/m.

As said results show, the slabs according to the invention have characteristics that are absolutely comparable to the comparative conventional slabs compared, with particular reference to their mechanical properties (bending breaking load), which makes them suitable, like the conventional slabs, for the traditional uses as elements of a temporary or permanent construction.

## Claims

1. Process for producing a fibrocement product comprising the steps of:
- providing a green fibrocement product;
- curing said green fibrocement product, thereby obtaining said fibrocement product,
the process being **characterized in that** said green fibrocement product comprises water, cement, organic fibers and glass powder.

2. Process according to claim 1, wherein the glass powder has a content of amorphous silica of at least 60%, preferably between 70% and 90%, wherein the percentages are by weight on the overall weight of the glass powder.

3. Process according to claim 1 or 2, wherein at least 90% of the glass powder particles has an average size lower or equal to 200 microns or wherein at least 50% of the particles of the glass powder, preferably between 70% and 90%, has a size of the particles lower or equal to 100 microns.

4. Process according to any one of the previous claims, wherein the glass powder comes at least partially from a glass recycling treatment, for example from post-consumer glass packaging.

5. Process according to any one of the previous claims, wherein the green fibrocement product contains glass powder in an amount which is not higher than 40% by weight, preferably in an amount which is not higher than 20%, more preferably in an amount between 2% and 10% by weight on the total weight of the green fibrocement product.

6. Process according to any one of the previous claims, further comprising crystalline silica or a crystalline silica source, in an amount between 50% and 90%, preferably between 70% and 90% by weight on the overall weight of the crystalline silica or the crystalline silica source and the glass powder.

7. Process according to any one of the previous claims, wherein the organic fibers are present in the green fibrocement product in an amount up to 15%, preferably between 5% and 10% by weight on the weight of the green fibrocement product.

8. Process according to any one of the previous claims, wherein the fibers are natural organic fibers, preferably cellulose fibers, and/or synthetic fibers, preferably polyvinyl alcohol fibers (PVA).

9. Process according to any one of the previous claims, wherein the green fibrocement product comprises 40% to 60% of cement, up to 40% of silica or a source thereof of which 70-90% consists of crystalline silica or a source thereof and the remaining 10-30% consists of glass powder, and up to 15% of fibers.

10. Process according to any one of the previous claims, wherein the green fibrocement product is obtained by a process comprising the steps of:
- forming a slurry comprising water, cement, organic fibers, glass powder and optionally crystalline silica or a source thereof,
- subjecting said slurry to at least one compression step, preferably to a double compression, thereby obtaining said green fibrocement product.

11. Process according to any one of the previous claims, wherein the curing of the green fibrocement product is made in air or autoclave, preferably in autoclave.

12. Fibrocement product obtainable by a process according to any one of the previous claims.

13. Fibrocement product according to claim 12 having the form of a slab or panel.

14. Fibrocement product according to claim 12 or 13, wherein the fibrocement product is an element of a temporary or permanent building construction.

15. Use of glass powder, preferably glass powder coming from a post-consumer glass recycling treatment, for the production of a fibrocement product.
